# EUROPEAN PATENT APPLICATION

(11) **EP 0 936 446 A1**
(43) Date of publication of application: **18.08.1999**
(21) Application number: 98102272.6
(22) Date of filing: 10.02.1998
(51) Int. Cl.: G01D 5/347

(54) **Displacement sensing system**

(71) Applicant: Primax Electronics Ltd, Hsi Chih Town, Taipei Hsien (TW)
(72) Inventor: Liu, Shu-Ming, Hsi Chih Town, Taipei Hsien, Taiwan (TW)
(74) Representative: Bauer, Robert, Dipl.-Ing.

(57) **Abstract**

A displacement sensing system (10) providing electrical signals is characterized by
an elongated member (14) having a plurality of optically detectable position marks (26) thereon,
an optical sensor (18) installed in spaced relationship with respect to said elongated member (14) in a position suitable for individually detecting said position marks (26) and generating corresponding sensing signals, said optical sensor being displaceable with respect to said elongated member (14) in the longitudinal direction thereof, and
a control circuit (20) connected to said optical sensor (18) for converting said sensing signals into corresponding position and/or displacement signals.
This system avoids physical contact of relatively displaceable sensible elements and thus deterioration by use.

## Description

The present invention relates to a displacement sensing system providing electrical signals.

Such displacement sensing systems are widely used in the form of variable resistors as input devices in electronic systems. In this case a slidable tap is engaged with a fixed resistor so as to change the resistance thereof. However, the contacting portions of such a variable resistor may easily get damaged by frequent use which will cause inaccuracy in monitoring displacements by any such system.

With this problem in mind, the invention as claimed aims at providing a displacement sensing system not subject to wear by frequent use.

This is achieved, according to the invention, by employing contactless optical sensing means in combination with a relatively movable elongated indexing member.

In the following the invention is illustrated by way of example with reference to the accompanying drawings, in which
Fig. 1 is a perspective view of an optical displacement sensing system according to the present invention,
Fig. 2 is a cross-sectional view along line 2-2 of the displacement sensing system shown in Fig. 1,
Fig. 3 is a diagrammatic view of various components of the displacement sensing system shown in Fig. 1, and
Fig. 4 is a circuit diagram of the optical sensor shown in Fig. 2.

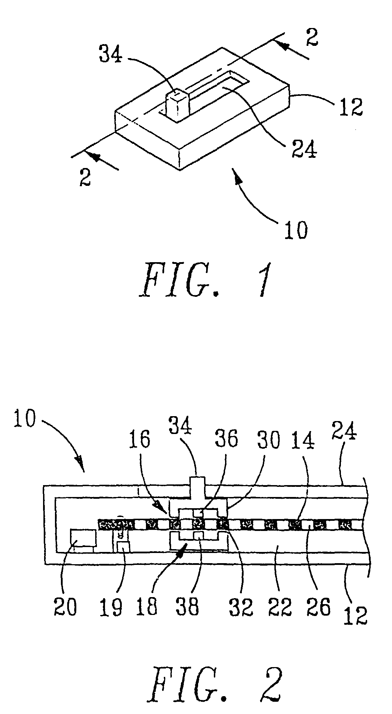

The optical displacement sensing system 10 shown in the Figs. 1 to 3 comprises a housing 12, an elongated member in the form of a plate 14, a slidable frame 16, an optical sensor 18, a reference position detector 19, and a control circuit 20. The housing 12 includes a chamber 22 and an elongated opening 24 at its top. The plate 14 is fixedly installed inside the chamber 22 in a horizontal position under the elongated opening 24. It comprises a sequence of position marks in the form of holes or transparent areas 26 arranged along its longitudinal direction and a plurality of parallel conductors 28 fixedly installed on its surface along the sequence of the holes or transparent areas 26. The slidable frame 16 comprises a frame body 30 having a sliding hole 32 in the middle of it and a button 34 on top. The slidable frame 16 is mounted on the plate 14, the plate 14 slidably extening through the sliding hole 32 and the button 34 extending through the elongated opening 24 of the housing 12 for being used to move the slidable frame 16 along the plate 14.

The optical sensor 18 is installed inside the frame body 30 for sensing the holes or transparent areas 26 of the plate 14 and generating corresponding sensing signals so that displacements of the slidable frame 16 along the plate 14 can be calculated from the sensing signals. The function of the optical sensor 18 is similar to that of the optical sensor used in a traditional pointing device such as a mouse. The optical sensor 18 comprises a light emitter 36 installed on one side, and a light receiver 38 installed on the other side of the plate 14 for receiving light emitted from the light emitter 36 through the holes or transparent areas 26 and generating corresponding sensing signals. The optical sensor 18 is slidably connected electrically to the parallel conductors 28 on the plate 14. The conductors 28 are wired to the control circuit 20 which is also installed in the housing 12 and supplies electric power to the sensor 18 as well as it converts the sensing signals generated by the sensor 18 into corresponding displacement signals.

The control circuit 20 comprises a memory 42 for storing programs and data, and a processor 46 for executing a position detecting program 44 stored in the memory 42. The position detecting program 44 is used for converting the sensing signals generated by the sensor 18 into corresponding displacement signals and transmitting the displacement signals over an output port 21.

However, the control circuit 20 can convert the sensing signals not only into displacement signals but also into position signals to indicate the position of the slidable frame 16 along the plate 14. To this end the reference position detector 19 is provided. It is fixedly installed in the housing 12 for detecting the slidable frame 16 in a predetermined reference position with respect to the plate 14. When using the optical sensing system 10 for obtaining position signals, a user has first to move the slidable frame 16 to the reference position in front of the reference position detector 19 to establish a corresponding reference position value of the slidable frame 16. The control circuit 20 will store the reference position value in the memory 42 whenever the slidable frame 16 is detected by the reference position detector 19. Thereafter the position detecting program 44 will calculate the displacement of the slidable frame 16 along the plate 14 according to the sensing signals generated by the sensor 18, update the position of the slidable frame 16 stored in the memory 42, and generate position signals over the output port 21 according to the position recorded in the memory 42. Whenever the slidable frame 16 is detected by the reference position detector 19, the control circuit 20 will immediately reset the monitored position of the slidable frame 16 to the reference position.

Except for the above-mentioned method using the reference position detector 19 to establish the true position of the slidable frame 16, there exists another method to set the position of the slidable frame 16. This method is very similar to the calibration method used with a traditional joystick. A user has to move the slidable frame 16 to both ends of the plate 14 so that the control circuit 20 can establish a position within a maximum moving range for the slidable frame 16 and store the position in the memory 42. Then the position detecting program 44 will update the position record of the slidable frame 16 according to the sensing signals generated by the sensor 18 and generate the position signals according to the position stored in the memory 42.

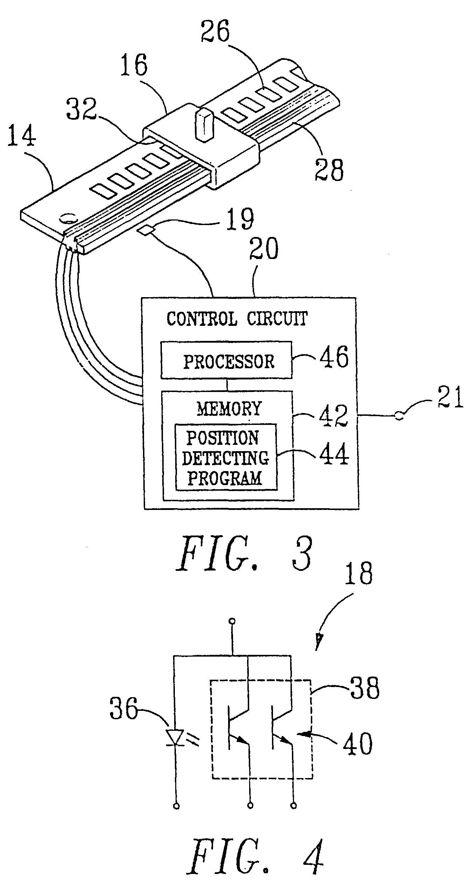

According to Fig. 4 the optical sensor 18 comprises a light emitter 36 and a light receiver 38. The light emitter 36 and light receiver 38 are connected to the control circuit 20 through the parallel conductors 28 installed on the surface of the elongated plate 14. The light emitter 36 is a light emitting diode, and the light receiver 38 comprises two light detectors 40 arranged along the longitudinal direction of the elongated plate 14 for detecting light passing through the holes or transparent areas 26 of the elongated plate 14. As mentioned before, the control circuit 20 shown in Fig.3 will use sensing signals generated by the sensor 18 to calculate the displacement of the slidable frame 16 and generate the corresponding displacement signals or position signals.

In contrast to traditional variable resistor displacement sensing systems frequent motion of the slidable frame 16 will not cause any damage, i.e. either to the optical sensor 18 or the holes or transparent areas 26. As long as the optical sensor 18 works properly, the control circuit 20 can always accurately detect the displacement of the slidable frame 16 and generate corresponding displacement or position signals.

## Claims

1. A displacement sensing system (10) providing electrical signals, the system (10) being **characterized** by
an elongated member (14) having a plurality of optically detectable position marks (26) thereon,
an optical sensor (18) installed in spaced relationship with respect to said elongated member (14) in a position suitable for individually detecting said position marks (26) and generating corresponding sensing signals, said optical sensor being displaceable with respect to said elongated member (14) in the longitudinal direction thereof, and
a control circuit (20) connected to said optical sensor (18) for converting said sensing signals into corresponding position and/or displacement signals.

2. The displacement sensing system (10) of claim 1, wherein said elongated member (14) is straight and said position marks (26) thereof are arranged along a straight line.

3. The displacement sensing system (10) of claim 1 or 2, wherein said elongated member (14) is in the form of an elongated plate.

4. The displacement sensing system (10) of claim 3, wherein said position marks (26) are formed by holes or transparent areas in said elongated plate (14).

5. The displacement sensing system (10) of claim 4, wherein said optical sensor (18) comprises a light emitter (36) positioned on one side and a light receiver (38) positioned on the other side of said elongated plate (14), suitable for detecting light from said light emitter (36) passing through said holes or transparent areas (26) of said elongated plate.

6. The displacement sensing system (10) of any one of the preceding claims, wherein said light receiver (38) comprises two light detectors (40) arranged one after the other in the displacement direction.

7. The displacement sensing system (10) of any one of the preceding claims, wherein said optical sensor (18) is installed on a slidable frame (16) slidable in the displacement direction with respect to said elongated member (14).

8. The displacement sensing system (10) of claim 7, wherein said optical sensor (18) is connected to said control circuit (20) by slidably contacting parallel conductors on said elongated member (14) extending in the displacement direction and wired to said control circuit.

9. The displacement sensing system (10) of claim 7 or 8, wherein said slidable frame (16) is slidably mounted on said elongated member (14).

10. The displacement sensing system (10) of any one of the preceding claims, wherein said control circuit (20) comprises a memory (42) for storing programs and data, a position detecting program (44) stored in said memory, and a processor (46) for executing said position detecting program.

11. The displacement sensing system (10) of claim 10, wherein said position detecting program (44), in a user actuated calibration procedure, detects a maximum displacement range of the displacement to be sensed to determine a reference position value and thereafter generates position signals according to said sensing signals in combination with said reference position value.

12. The displacement sensing system (10) of any one of the preceding claims, wherein a reference position detector (19) is installed to detect a reference position of said optical sensor (18) with respect to said elongated member (14), and said control circuit (20) generates position signals according to said sensing signals in combination with the output of said reference position detector.

13. The displacement sensing system (10) of claim 12 in combination with claim 10, wherein, whenever said reference position detector (19) is actuated to indicate said reference position, said position detecting program (44) will record the corresponding position of said optical sensor (18) with respect to said elongated member (14) in said memory (42) and thereafter, with any displacement monitored, the position detecting program will update the position record in the memory according to the corresponding sensing signals and generate the position signals according to the position record stored in the memory.

14. The displacement sensing system (10) of any one of the preceding claims, further comprising a housing (12) having an elongated opening (24), and a button (34) protruding through said opening for imparting the displacement to be sensed to one of said optical sensor (18) and said elongated member (14) both received in said housing.
